(19) Europäisches Patentamt
European Patent Office
Office européen des brevets

(11) EP 4 790 094 A1

# (12) EUROPEAN PATENT APPLICATION

published in accordance with Art. 153(4) EPC

(43) Date of publication:
**12.08.2026 Bulletin 2026/33**

(21) Application number: **24874764.4**

(22) Date of filing: **04.10.2024**

(51) International Patent Classification (IPC):
***C08L 33/08*** *(2006.01)* ***C08K 5/14*** *(2006.01)*
***C08K 5/36*** *(2006.01)* ***C09K 3/10*** *(2006.01)*
***F16L 11/06*** *(2006.01)*

(52) Cooperative Patent Classification (CPC):
**C08K 5/14; C08K 5/36; C08L 33/08; C09K 3/10; F16L 11/06**

(86) International application number:
**PCT/JP2024/035664**

(87) International publication number:
**WO 2025/075165 (10.04.2025 Gazette 2025/15)**

(84) Designated Contracting States:
**AL AT BE BG CH CY CZ DE DK EE ES FI FR GB GR HR HU IE IS IT LI LT LU LV MC ME MK MT NL NO PL PT RO RS SE SI SK SM TR**
Designated Extension States:
**BA**
Designated Validation States:
**GE KH MA MD TN**

(30) Priority: **06.10.2023 JP 2023174685**

(71) Applicant: **Zeon Corporation**
**Tokyo 100-8246 (JP)**

(72) Inventor: **BANDO, Fumiaki**
**Tokyo 100-8246 (JP)**

(74) Representative: **Maiwald GmbH**
**Elisenhof**
**Elisenstraße 3**
**80335 München (DE)**

## (54) ACRYLIC RUBBER COMPOSITION AND RUBBER CROSSLINKED PRODUCT

(57) Provided is an acrylic rubber composition comprising an acrylic rubber (A), an organic peroxide (B), a co-cross-linking agent (C), and a sulfur-based compound (D), wherein a content of the organic peroxide (B) is 0.1 to 5 parts by weight relative to 100 parts by weight of the acrylic rubber (A), a content of the co-cross-linking agent (C) is 0.1 to 10 parts by weight relative to 100 parts by weight of the acrylic rubber (A), and a content of the sulfur-based compound (D) is 0.05 to 3 parts by weight relative to 100 parts by weight of the acrylic rubber (A).

EP 4 790 094 A1

## Description

TECHNICAL FIELD

The present invention relates to an acrylic rubber composition and a cross-linked rubber.

BACKGROUND ART

Usually, an acrylic rubber composition is cross-linked by performing primary cross-linking of heating at about 150°C to 190°C for several minutes to tens of minutes, and then secondary cross-linking of heating for several hours under a heated air environment at 140°C to 200°C.

For example, Patent Document 1 discloses an acrylic rubber composition comprising 30 to 80% by weight of methoxyethyl acrylate, 70 to 20% by weight of alkyl acrylate and/or alkoxy-substituted alkyl acrylate (excluding methoxyethyl acrylate), and 0 to 30% by weight of a copolymerizable additional monomer without any cross-linking point group, wherein the acrylic rubber is blended with an organic peroxide and a bismaleimide compound as vulcanizing agents.

RELATED ART DOCUMENT

PATENT DOCUMENT

Patent Document 1: JP H05-214196 A

SUMMARY OF THE INVENTION

PROBLEM TO BE SOLVED BY THE INVENTION

From the viewpoint of productivity of a cross-linked rubber, energy saving, and carbon neutrality, an acrylic rubber composition that can give a cross-linked rubber having good physical properties by only primary cross-linking without need for secondary cross-linking is desired.

For example, in Patent Document 1 above, in which a cross-linked rubber of the acrylic rubber composition is obtained by performing primary vulcanization, the acrylic rubber composition has inferior scorch stability. Generally, inferior scorch stability will initiate an unintentional cross-linking reaction when the acrylic rubber composition is stored or when the acrylic rubber composition is processed, resulting in a rubber composition having poor storage stability and poor processability.

The present invention has been made in consideration of such circumstances, and an object of the present invention is to provide an acrylic rubber composition which has a sufficient cross-linking speed, has favorable scorch stability, and can give a cross-linked rubber having sufficient mechanical properties even if secondary cross-linking is not performed.

MEANS FOR SOLVING PROBLEMS

The present inventor, who has conducted extensive research, has found that the above-mentioned object can be achieved by an acrylic rubber composition comprising an acrylic rubber (A), an organic peroxide (B), a co-cross-linking agent (C), and a sulfur-based compound (D) in specific proportions, and has completed the present invention.

Specifically, the present invention provides an acrylic rubber composition and a cross-linked rubber below.

[1] An acrylic rubber composition comprising an acrylic rubber (A), an organic peroxide (B), a co-cross-linking agent (C), and a sulfur-based compound (D),

wherein a content of the organic peroxide (B) is 0.1 to 5 parts by weight relative to 100 parts by weight of the acrylic rubber (A),
a content of the co-cross-linking agent (C) is 0.1 to 10 parts by weight relative to 100 parts by weight of the acrylic rubber (A), and
a content of the sulfur-based compound (D) is 0.05 to 3 parts by weight relative to 100 parts by weight of the acrylic rubber (A).

[2] The acrylic rubber composition according to [1], wherein the acrylic rubber (A) contains at least one of an alkyl (meth)acrylate ester monomer unit and an alkoxyalkyl (meth)acrylate ester monomer unit in a proportion of 40 to 100%

by weight.

[3] A cross-linked rubber prepared by cross-linking the acrylic rubber composition according to [1] or [2].

[4] The cross-linked rubber according to [3], wherein the cross-linked rubber is a hose material or a sealing material.

EFFECTS OF THE INVENTION

The present invention provides an acrylic rubber composition which has a sufficient cross-linking speed, has favorable scorch stability, and can give a cross-linked rubber having sufficient mechanical properties even if secondary cross-linking is not performed.

DESCRIPTION OF EMBODIMENTS

The acrylic rubber composition according to the present invention is an acrylic rubber composition comprising an acrylic rubber (A), an organic peroxide (B), a co-cross-linking agent (C), and a sulfur-based compound (D),

wherein a content of the organic peroxide (B) is 0.1 to 5 parts by weight relative to 100 parts by weight of the acrylic rubber (A),

a content of the co-cross-linking agent (C) is 0.1 to 10 parts by weight relative to 100 parts by weight of the acrylic rubber (A), and

a content of the sulfur-based compound (D) is 0.05 to 3 parts by weight relative to 100 parts by weight of the acrylic rubber (A).

The acrylic rubber composition according to the present invention, which contains a combination of the acrylic rubber (A), the organic peroxide (B), the co-cross-linking agent (C), and the sulfur-based compound (D) in the amounts specified above, has a sufficient cross-linking speed, has favorable scorch stability, and can give a cross-linked rubber having sufficient mechanical properties (specifically, tensile properties and hardness) even if secondary cross-linking is not performed.

<Acrylic rubber (A)>

The acrylic rubber (A) used in the present invention can be any acrylic rubber as long as it contains a (meth)acrylic acid ester monomer [which means an acrylic acid ester monomer and/or a methacrylic acid ester monomer. Hereinafter, the word "(meth)acryl" should be interpreted in the same manner as described above.] unit in the molecule as the main component (for example, 50% by weight or more in the total monomer units in the acrylic rubber), and is not particularly limited.

Examples of a (meth)acrylic acid ester monomer which forms the (meth)acrylic acid ester monomer unit as the main component of the acrylic rubber (A) used in the present invention include, but should not be limited to, alkyl (meth) acrylate ester monomers, alkoxyalkyl (meth)acrylate ester monomers, and the like.

Although the alkyl (meth)acrylate ester monomers are not particularly limited, the alkyl (meth)acrylate ester monomers are preferably (meth)acrylic acid esters of $C_1$ to $C_{12}$ alkanols ((meth)acrylic acid esters having a $C_1$ to $C_{12}$ alkyl group), more preferably (meth)acrylic acid esters of $C_1$ to $C_8$ alkanols ((meth)acrylic acid esters having a $C_1$ to $C_8$ alkyl group), still more preferably (meth)acrylic acid esters of $C_2$ to $C_6$ alkanols ((meth)acrylic acid esters having a $C_2$ to $C_6$ alkyl group).

Specific examples of such alkyl (meth)acrylate ester monomers include methyl (meth)acrylate, ethyl (meth) acrylate, n-propyl (meth)acrylate, isopropyl (meth)acrylate, n-butyl (meth)acrylate, isobutyl (meth)acrylate, n-hexyl (meth)acrylate, 2-ethylhexyl (meth)acrylate, cyclohexyl (meth)acrylate, and the like. Among these, preferred are ethyl (meth)acrylate and n-butyl (meth)acrylate, and more preferred are ethyl acrylate and n-butyl acrylate. These can be used alone or in combination.

For example, the acrylic rubber (A) used in the present invention may contain both of an ethyl acrylate unit and a n-butyl acrylate unit as the alkyl (meth)acrylate ester monomer units. In this case, the ratio of the contents of these two monomer units by weight [content of ethyl acrylate unit:content of n-butyl acrylate unit] is preferably 1:99 to 99:1, more preferably 10:90 to 90:10, still more preferably 30:70 to 80:20, particularly preferably 40:60 to 60:40.

Although the alkoxyalkyl (meth)acrylate ester monomers are not particularly limited, the alkoxyalkyl (meth) acrylate ester monomers are preferably (meth)acrylic acid esters of $C_2$ to $C_{12}$ alkoxyalkyl alcohols ((meth)acrylic acid esters having a $C_2$ to $C_{12}$ alkoxyalkyl group), more preferably (meth)acrylic acid esters of $C_2$ to $C_8$ alkoxyalkyl alcohols ((meth)acrylic acid esters having a $C_2$ to $C_8$ alkoxyalkyl group), still more preferably (meth)acrylic acid esters of $C_2$ to $C_6$ alkoxyalkyl alcohols ((meth)acrylic acid esters having a $C_2$ to $C_6$ alkoxyalkyl group).

Specific examples of such alkoxyalkyl (meth)acrylate ester monomers include methoxymethyl (meth)acrylate,

ethoxymethyl (meth)acrylate, 2-methoxyethyl (meth)acrylate, 2-ethoxyethyl (meth)acrylate, 2-propoxyethyl (meth)acrylate, 2-butoxyethyl (meth)acrylate, 3-methoxypropyl (meth)acrylate, 4-methoxybutyl (meth)acrylate, and the like. Among these, preferred are 2-ethoxyethyl (meth)acrylate and 2-methoxyethyl (meth)acrylate, and particularly preferred are 2-ethoxyethyl acrylate and 2-methoxyethyl acrylate. These can be used alone or in combination.

The total content of the alkyl (meth)acrylate ester monomer unit and the alkoxyalkyl (meth)acrylate ester monomer unit in the total monomer units contained in the acrylic rubber (A) used in the present invention is preferably 40% by weight or more, more preferably 60% by weight or more, still more preferably 80% by weight or more, further still more preferably 90% by weight or more, particularly preferably 95% or more. When the total content of the alkyl (meth) acrylate ester monomer unit and the alkoxyalkyl (meth)acrylate ester monomer unit falls within these ranges above, a cross-linked rubber having more excellent mechanical properties is obtained.

Although the acrylic rubber (A) used in the present invention can be any acrylic rubber as long as it contains an (meth)acrylic acid ester monomer in the molecule as a main component, the acrylic rubber (A) preferably contains at least an alkyl (meth)acrylate ester monomer unit.

When the acrylic rubber (A) used in the present invention contains both of an alkyl (meth)acrylate ester monomer unit and an alkoxyalkyl (meth)acrylate ester monomer unit, the ratio of the contents of these two monomer units by weight [content of alkyl (meth)acrylate ester monomer unit:content of alkoxyalkyl (meth)acrylate ester monomer unit] is preferably 1:99 to 99:1, more preferably 40:60 to 98:2, still more preferably 60:40 to 95:5, particularly preferably 70:30 to 85:15.

The acrylic rubber (A) used in the present invention may contain a carboxyl group-containing monomer unit, a monomer unit having an epoxy group, a monomer unit having a halogen atom, a diene monomer unit, or the like in addition to the (meth)acrylic acid ester monomer unit.

Examples of a carboxyl group-containing monomer which forms the carboxyl group-containing monomer unit include, but should not be limited to, α,β-ethylenically unsaturated dicarboxylic acid monoester monomers, α,β-ethylenically unsaturated monocarboxylic acids, α,β-ethylenically unsaturated dicarboxylic acids, and the like.

The α,β-ethylenically unsaturated dicarboxylic acid monoester monomers are preferably monoesters of $C_4$ to $C_{12}$ α,β-ethylenically unsaturated dicarboxylic acids and $C_1$ to $C_{12}$ alkanols, more preferably monoesters of $C_4$ to $C_6$ α,β-ethylenically unsaturated dicarboxylic acids and $C_2$ to $C_8$ alkanols, still more preferably monoesters of $C_4$ α,β-ethylenically unsaturated dicarboxylic acids and $C_2$ to $C_6$ alkanols.

Specific examples of α,β-ethylenically unsaturated dicarboxylic acid monoester monomers include chain monoalkyl esters of butenedioic acids, such as monomethyl fumarate, monoethyl fumarate, mono-n-butyl fumarate, monomethyl maleate, monoethyl maleate, and mono-n-butyl maleate; butenedioic acid monoesters having an alicyclic structure, such as monocyclopentyl fumarate, monocyclohexyl fumarate, monocyclohexenyl fumarate, monocyclopentyl maleate, monocyclohexyl maleate, and monocyclohexenyl maleate; itaconic acid monoesters, such as monomethyl itaconate, monoethyl itaconate, mono-n-butyl itaconate, and monocyclohexyl itaconate; and the like. These can be used alone or in combination. Among these monomers listed above, the dicarboxylic acids include those present as anhydrides.

Specific examples of α,β-ethylenically unsaturated monocarboxylic acids include acrylic acid, methacrylic acid, α-ethylacrylic acid, crotonic acid, cinnamic acid, and the like.

Specific examples of α,β-ethylenically unsaturated dicarboxylic acids include butenedioic acids such as fumaric acid and maleic acid; itaconic acid; citraconic acid; chloromaleic acid; and the like. The monomers listed above include those present as anhydrides.

Among these, preferred are α,β-ethylenically unsaturated dicarboxylic acid monoester monomers, more preferred are chain monoalkyl esters of butenedioic acid and butenedioic acid monoesters having an alicyclic structure, still more preferred are mono-n-butyl fumarate, mono-n-butyl maleate, monocyclohexyl fumarate, and monocyclohexyl maleate, and particularly preferred is mono-n-butyl fumarate.

When the acrylic rubber (A) used in the present invention contains the carboxyl group-containing monomer unit, the content of the carboxyl group-containing monomer unit is preferably 0.1 to 10% by weight, more preferably 0.5 to 7% by weight, still more preferably 0.5 to 5% by weight, particularly preferably 1 to 3% by weight. When the content of the carboxyl group-containing monomer units falls within these ranges above, the scorch stability and the mechanical properties of the primarily cross-linked product can be satisfied at a higher level.

Examples of a monomer having an epoxy group which forms the monomer unit having an epoxy group include, but should not be limited to, epoxy group-containing (meth)acrylic acid esters, epoxy group-containing ethers, and the like.

Specific examples of the epoxy group-containing (meth)acrylic acid esters include glycidyl (meth)acrylate.

Specific examples of the epoxy group-containing ethers include allyl glycidyl ether, vinyl glycidyl ether, and the like. Among these, preferred are glycidyl methacrylate and allyl glycidyl ether. These monomers having an epoxy group can be used alone or in combination.

When the acrylic rubber (A) used in the present invention contains a monomer unit having an epoxy group, the content of the monomer unit having an epoxy group is preferably 0.1 to 10% by weight, more preferably 0.5 to 7% by weight, still more preferably 0.5 to 5% by weight, particularly preferably 1 to 3% by weight. When the content of the monomer unit having an epoxy group falls within these ranges above, the cross-linking speed, the scorch stability, and the mechanical

properties of the primarily cross-linked product can be satisfied at a higher level.

Examples of a monomer having a halogen atom which forms the monomer unit having a halogen atom include, but should not be limited to, unsaturated alcohol esters of halogen-containing saturated carboxylic acids, haloalkyl (meth) acrylates, haloacyloxyalkyl (meth)acrylates, (haloacetylcarbamoyloxy)alkyl (meth)acrylates, halogen-containing unsaturated ethers, halogen-containing unsaturated ketones, halomethyl group-containing aromatic vinyl compounds, halogen-containing unsaturated amides, haloacetyl group-containing unsaturated monomers, and the like.

Specific examples of the unsaturated alcohol esters of halogen-containing saturated carboxylic acids include vinyl monochloroacetate, vinyl 2-chloropropionate, allyl chloroacetate, and the like.

Specific examples of the haloalkyl (meth)acrylates include chloromethyl (meth)acrylate, 1-chloroethyl (meth) acrylate, 2-chloroethyl (meth)acrylate, 1,2-dichloroethyl (meth)acrylate, 2-chloropropyl (meth)acrylate, 3-chloropropyl(meth)acrylate, 2,3-dichloropropyl (meth)acrylate, and the like.

Specific examples of the haloacyloxyalkyl (meth)acrylates include 2-(chloroacetoxy)ethyl (meth)acrylate, 2-(chloroacetoxy)propyl (meth)acrylate, 3-(chloroacetoxy)propyl (meth)acrylate, 3-(hydroxychloroacetoxy)propyl (meth)acrylate, and the like.

Specific examples of the (haloacetylcarbamoyloxy)alkyl (meth)acrylates include 2-(chloroacetylcarbamoyloxy) ethyl (meth)acrylate, 3-(chloroacetylcarbamoyloxy)propyl (meth)acrylate, and the like.

Specific examples of the halogen-containing unsaturated ethers include chloromethyl vinyl ether, 2-chloroethyl vinyl ether, 3-chloropropyl vinyl ether, 2-chloroethyl allyl ether, 3-chloropropyl allyl ether, and the like.

Specific examples of the halogen-containing unsaturated ketones include 2-chloroethyl vinyl ketone, 3-chloropropyl vinyl ketone, 2-chloroethyl allyl ketone, and the like.

Specific examples of the halomethyl group-containing aromatic vinyl compounds include p-chloromethylstyrene, m-chloromethylstyrene, o-chloromethylstyrene, p-chloromethyl-$\alpha$-methylstyrene, and the like.

Specific examples of the halogen-containing unsaturated amides include N-chloromethyl(meth)acrylamide, and the like.

Specific examples of the haloacetyl group-containing unsaturated monomers include 3-(hydroxychloroacetoxy) propyl allyl ether, p-vinylbenzyl chloroacetate, and the like.

Among these, preferred are unsaturated alcohol esters of halogen-containing saturated carboxylic acids and halogen-containing unsaturated ethers, more preferred are vinyl monochloroacetate and 2-chloroethyl vinyl ether, and still more preferred is vinyl monochloroacetate. These monomers having a halogen atom can be used alone or in combination.

When the acrylic rubber (A) used in the present invention contains a monomer unit having a halogen atom, the content of the monomer unit having a halogen atom is preferably 0.1 to 10% by weight, more preferably 0.5 to 7% by weight, still more preferably 0.5 to 5% by weight, particularly preferably 1 to 3% by weight. When the content of the monomer unit having a halogen atom falls within these ranges above, the cross-linking speed, the scorch stability, and the mechanical properties of the primarily cross-linked product can be satisfied at a higher level.

Examples of a diene monomer which forms the diene monomer unit include conjugated diene monomers and non-conjugated diene monomers.

Specific examples of the conjugated diene monomers include 1,3-butadiene, isoprene, piperylene, and the like.

Specific examples of the non-conjugated diene monomers include ethylidene norbornene, dicyclopentadiene, dicyclopentadienyl (meth)acrylate, 2-dicyclopentadienylethyl (meth)acrylate, and the like.

These carboxyl group-containing monomers, monomers having an epoxy group, monomers having a halogen atom, and diene monomers can be used alone or in combination.

In addition to the monomer units described above, the acrylic rubber (A) used in the present invention may contain a unit of an additional monomer copolymerizable with these monomers. Examples of such a copolymerizable additional monomer include, but should not be limited to, aromatic vinyl monomers, $\alpha,\beta$-ethylenically unsaturated nitrile monomers, acrylamide monomers, $\alpha,\beta$-ethylenically unsaturated dicarboxylic acid diester monomers, other olefin monomers, and the like.

Examples of the aromatic vinyl monomers include styrene, $\alpha$-methylstyrene, divinylbenzene, and the like.

Examples of the $\alpha,\beta$-ethylenically unsaturated nitrile monomers include acrylonitrile, methacrylonitrile, and the like.

Examples of the acrylamide monomers include acrylamide, methacrylamide, and the like.

Examples of the $\alpha,\beta$-ethylenically unsaturated dicarboxylic acid diester monomers include maleic acid dialkyl esters having a $C_1$ to $C_{18}$ alkyl group, such as dimethyl maleate and di-n-butyl maleate; fumaric acid dialkyl esters a having $C_1$ to $C_{18}$ alkyl group, such as dimethyl fumarate and di-n-butyl fumarate; maleic acid dicycloalkyl esters having a $C_4$ to $C_{16}$ cycloalkyl group, such as dicyclopentyl maleate and dicyclohexyl maleate; fumaric acid dicycloalkyl esters having a $C_4$ to $C_{16}$ cycloalkyl group, such as dicyclopentyl fumarate and dicyclohexyl fumarate; itaconic acid dialkyl esters having a $C_1$ to $C_{18}$ alkyl group, such as dimethyl itaconate and di-n-butyl itaconate; itaconic acid dicycloalkyl esters having a $C_4$ to $C_{16}$ cycloalkyl group, such as dicyclohexyl itaconate; and the like.

Examples of the other olefin monomers include ethylene, propylene, vinyl chloride, vinylidene chloride, vinyl

acetate, ethyl vinyl ether, butyl vinyl ether, and the like.

These copolymerizable additional monomers can be used alone or in combination. The content of the unit of the copolymerizable additional monomer in the monomer units contained in the acrylic rubber (A) used in the present invention is preferably 48.7% by weight or less, more preferably 28.5% by weight or less, still more preferably 18.5% by weight or less, particularly preferably 13.5% by weight or less, most preferably 8.0% by weight or less.

The acrylic rubber (A) used in the present invention can be obtained by polymerizing the monomers described above. As a type of the polymerization reaction, any method of emulsion polymerization, suspension polymerization, bulk polymerization, and solution polymerization can be used. From the viewpoint of ease in control of the polymerization reaction, preferred is emulsion polymerization under normal pressure.

Emulsion polymerization may be performed by any one of a batchwise method, a semi-batchwise method, and a continuous method. The polymerization is performed in the temperature range of usually 0 to 70°C, preferably 5 to 50°C. The total amount of all the above-mentioned monomers need not always be fed to the reaction system from the start of the reaction. In consideration of the copolymerization reactivity ratio, the reaction conversion ratio, and the like, these monomers may be continuously or intermittently added over the entire reaction time, or may be introduced in batch or in portions in the middle or latter stage. Although the proportions of the above-mentioned monomers charged in the polymerization reaction can be adjusted according to the reactivities of the monomers, the polymerization reaction often progresses approximately quantitatively. In consideration of such circumstances, the proportions thereof charged can be determined according to the monomer unit composition of the acrylic rubber (A) to be produced. After the polymerization, solidification and then drying are performed, giving a solid acrylic rubber (A).

The acrylic rubber (A) used in the present invention thus produced has a Mooney viscosity (ML1+4, 100°C) (polymer Mooney) of preferably 10 to 150, more preferably 10 to 80, still more preferably 20 to 70, further still more preferably 25 to 60, particularly preferably 30 to 50.

The acrylic rubber (A) used in the present invention can have any form, and may have any of a bale form, a sheet shape, a powder form, and the like.

<Organic peroxide (B)>

The acrylic rubber composition according to the present invention comprises 0.1 to 5 parts by weight of an organic peroxide (B) relative to 100 parts by weight of the acrylic rubber (A).

The organic peroxide (B) can be any organic peroxide as long as it is used as a cross-linking agent in the rubber industry field, and examples thereof include dialkyl peroxides, diacyl peroxides, peroxyesters, and the like.

Examples of the dialkyl peroxides include dicumyl peroxide, dit-butylperoxide, 2,5-dimethyl-2,5-di(t-butylperoxy)-3-hexyne, 2,5-dimethyl-2,5-di(t-butylperoxy)hexane, 1,3-bis(t-butylperoxyisopropyl)benzene, and the like.

Examples of the diacyl peroxides include benzoyl peroxide, isobutyryl peroxide, and the like.

Examples of the peroxyesters include 2,5-dimethyl-2,5-bis(benzoylperoxy)hexane, t-butylperoxyisopropyl carbonate, and the like.

Among these, preferred are dialkyl peroxides, and more preferred is 1,3-bis(t-butylperoxyisopropyl)benzene.

The content of the organic peroxide (B) in the acrylic rubber composition according to the present invention is 0.1 to 5 parts by weight relative to 100 parts by weight of the acrylic rubber (A). If the content of the organic peroxide (B) is too small, cross-linking of the acrylic rubber composition does not sufficiently progress, and thus a cross-linked rubber cannot be obtained. In contrast, if the content of the organic peroxide (B) is too large, the scorch stability and the mechanical properties of the primarily cross-linked product are insufficient.

Although the content of the organic peroxide (B) is not particularly limited as long as it is 0.1 to 5 parts by weight relative to 100 parts by weight of the acrylic rubber (A), the content is preferably 0.5 to 4.5 parts by weight, more preferably 1 to 4 parts by weight, still more preferably 1.5 to 3 parts by weight. When the content of the organic peroxide (B) falls within these ranges above, the cross-linking speed, the scorch stability, and the mechanical properties of the primarily cross-linked product can be satisfied at a higher level.

Although the acrylic rubber composition according to the present invention may contain a cross-linking agent other than the organic peroxide (B), the content thereof is preferably 0.5 parts by weight or less, more preferably 0.1 parts by weight or less relative to 100 parts by weight of the acrylic rubber (A).

<Co-cross-linking agent (C)>

The acrylic rubber composition according to the present invention comprises 0.1 to 10 parts by weight of a co-cross-linking agent (C) relative to 100 parts by weight of the acrylic rubber (A).

The co-cross-linking agent (C) is not particularly limited, and is preferably a low- or high-molecular compound having a plurality of radically reactive unsaturated groups in the molecule. Examples thereof include polyfunctional vinyl compounds such as divinylbenzene and divinylnaphthalene; isocyanurates such as triallyl isocyanurate and trimethallyl

isocyanurate; cyanurates such as triallyl cyanurates; maleimides such as N,N'-m-phenylenedimaleimide and diphenylmethane-4,4'-bismaleimide; allyl esters of polyvalent acids such as diallyl phthalate, diallyl isophthalate, diallyl maleate, diallyl fumarate, diallyl sebacate, and triallyl phosphate; allyl ethers, such as diethylene glycol bisallyl carbonate; ethylene glycol diallyl ether, triallyl ether of trimethylolpropane, and partial allyl ether of pentaerythritol; allyl-modified resins such as allylated novolak and allylated resole resin; trito pentafunctional methacrylate compounds and acrylate compounds such as trimethylolpropane trimethacrylate and trimethylolpropane triacrylate; and the like. These can be used alone or in combination.

Among these, preferred are isocyanurates, maleimides, allyl ethers, tri- to pentafunctional methacrylate compounds, and acrylate compounds, and more preferred are triallyl isocyanurate, N,N'-m-phenylenedimaleimide, and trimethylolpropane trimethacrylate.

The content of the co-cross-linking agent (C) in the acrylic rubber composition according to the present invention is 0.1 to 10 parts by weight relative to 100 parts by weight of the acrylic rubber (A). If the content of the co-cross-linking agent (C) is too small, the cross-linking of the acrylic rubber composition does not sufficiently progress, and thus a cross-linked rubber cannot be obtained. In contrast, if the content of the co-cross-linking agent (C) is too large, the scorch stability and the mechanical properties of the primarily cross-linked product are insufficient.

Although the content of the co-cross-linking agent (C) is not particularly limited as long as it is 0.1 to 10 parts by weight relative to 100 parts by weight of the acrylic rubber (A), it is preferably 0.2 to 8 parts by weight, more preferably 0.3 to 7 parts by weight, still more preferably 0.5 to 5 parts by weight. When the content of the co-cross-linking agent (C) falls within these ranges above, the cross-linking speed, the scorch stability, and the mechanical properties of the primarily cross-linked product can be satisfied at a higher level.

<Sulfur-based compound (D)>

The acrylic rubber composition according to the present invention comprises 0.05 to 3 parts by weight of a sulfur-based compound (D) relative to 100 parts by weight of the acrylic rubber (A).

In the present invention, the above-mentioned predetermined amount of the sulfur-based compound (D) is blended with the acrylic rubber (A) together with the organic peroxide (B) and the co-cross-linking agent (C).

In particular, the present inventor has conducted extensive research, and has found that the reaction of the acrylic rubber (A) with the organic peroxide (B) and the co-cross-linking agent (C) can be suppressed by using the predetermined amount of the sulfur-based compound (D) in addition of the organic peroxide (B) and the co-cross-linking agent (C), and thus an unintentional cross-linking reaction of the acrylic rubber (A) can be suppressed, resulting in favorable scorch stability. In particular, in the present invention, by appropriately controlling the blending amount of the sulfur-based compound (D), favorable scorch stability can be obtained, and at the same time, a sufficient cross-linking speed can be obtained.

Furthermore, in addition to this, the present inventor has conducted research, and has found that a cross-linked rubber obtained by cross-linking the acrylic rubber composition having the above-mentioned configuration can have sufficient mechanical properties. In particular, according to the knowledge of the present inventor, when the acrylic rubber (A) is cross-linked using the organic peroxide (B) and the co-cross-linking agent (C) (namely, without the sulfur-based compound (D)), a reaction to cut the main chain of the molecule forming the acrylic rubber (A) by the organic peroxide (B) also occurs simultaneously with progression of the cross-linking reaction of the acrylic rubber (A), thereby reducing the molecular weight of the acrylic rubber (A) itself, and leading to a cross-linked rubber having insufficient mechanical properties. In contrast, the present inventor has conducted, and has found that by using the predetermined amount of the sulfur-based compound (D) in combination of the organic peroxide (B) and the co-cross-linking agent (C), the sulfur-based compound (D) acts on the acrylic rubber (A) during the cross-linking reaction and can effectively suppress cutting of the main chain of the molecule forming the acrylic rubber (A), thereby suppressing a reduction in molecular weight of the acrylic rubber (A) itself, and leading to a cross-linked rubber having sufficient mechanical properties. In particular, in the present invention, use of such a configuration can give a cross-linked rubber having sufficient mechanical properties even if secondary cross-linking is not performed.

Examples of the sulfur-based compound (D) include sulfurs such as powdered sulfur, sublimed sulfur, precipitated sulfur, colloidal sulfur, surface-treated sulfur, and insoluble sulfur; sulfur-containing compounds such as sulfur chloride, sulfur dichloride, morpholine disulfide, alkylphenol disulfide, N,N'-dithio-bis(hexahydro-2H-azepinone-2), phosphorus-containing polysulfide, polymeric polysulfide, and 2-(4'-morpholinodithio)benzothiazole, and phenothiazine; dithiocarbamic acids, such as dibutyldithiocarbamic acid, di-2-ethylhexyldithiocarbamic acid, dicyclohexyldithiocarbamic acid, diphenyldithiocarbamic acid, and dibenzyldithiocarbamic acid, and zinc salts thereof; thiuram compounds such as tetramethylthiuram disulfide, tetraethylthiuram disulfide, and tetramethylthiuram monosulfide; and the like. These can be used alone or in combination.

Among these, preferred are sulfur, phenothiazine, zinc dibutyldithiocarbamate, and tetramethylthiuram disulfide.

The content of the sulfur-based compound (D) in the acrylic rubber composition according to the present

invention is 0.05 to 3 parts by weight relative to 100 parts by weight of the acrylic rubber (A). If the content of the sulfur-based compound (D) is too small, the scorch stability of the acrylic rubber composition and the mechanical properties of the primarily cross-linked product are insufficient. In contrast, if the content of the sulfur-based compound (D) is too large, the cross-linking of the acrylic rubber composition is not sufficiently performed.

The content of the sulfur-based compound (D) is not particularly limited as long as it is 0.05 to 3 parts by weight relative to 100 parts by weight of the acrylic rubber (A), and it is preferably 0.06 to 2.5 parts by weight, more preferably 0.08 to 2.2 parts by weight, still more preferably 0.1 to 2 parts by weight. When the content of the sulfur-based compound (D) falls within these ranges above, the cross-linking speed, the scorch stability, and the mechanical properties of the primarily cross-linked product can be satisfied at a higher level.

<Other ingredients>

The acrylic rubber composition according to the present invention may contain a rubber other than the acrylic rubber (A).

Examples of the rubber other than the acrylic rubber (A) which can be used in the present invention include, but should not be limited to, natural rubber, polybutadiene rubber, polyisoprene rubber, styrenebutadiene rubber, acrylonitrile-butadiene rubber, silicon rubber, fluorocarbon rubber, olefin elastomers, styrene elastomers, vinyl chloride elastomers, polyester elastomers, polyamide elastomers, polyurethane elastomers, polysiloxane elastomers, and the like. These can be used alone or in combination.

The proportion of the acrylic rubber (A) component in the rubber components contained in the acrylic rubber composition may be appropriately selected, and is preferably 70% by weight or more, more preferably 90% by weight or more, still more preferably 95% by weight or more, particularly preferably 100% by weight (that is, an embodiment in which the rubber components of the acrylic rubber composition contain substantially only the acrylic rubber (A) component).

Preferably, the acrylic rubber composition according to the present invention contains a filler such as a reinforcing filler and a non-reinforcing filler.

Examples of the reinforcing filler include carbon blacks such as furnace black, acetylene black, thermal black, channel black, and graphite; silicas such as wet silica, dry silica, and colloidal silica; and the like. Examples of the non-reinforcing filler include quartz powder, clays such as diatomite, zinc oxide, basic magnesium carbonate, active calcium carbonate, magnesium silicate, aluminum silicate, titanium dioxide, talc, aluminum sulfate, calcium sulfate, barium sulfate, and the like. These fillers can be used alone or in combination.

Although the content of the filler in the acrylic rubber composition according to the present invention is not particularly limited, the content is preferably 1 to 200 parts by weight, more preferably 10 to 150 parts by weight, still more preferably 20 to 100 parts by weight relative to 100 parts by weight of the rubber components including the acrylic rubber (A) in the acrylic rubber composition.

The acrylic rubber composition according to the present invention may contain an antioxidant as needed. Examples of the antioxidant include, but should not be limited to, phenolic antioxidants such as sterically hindered phenolic antioxidants, semi-hindered phenolic antioxidants, less-hindered phenolic antioxidants, and phenolic antioxidants having no hindered group; phosphorous acid ester antioxidants; sulfur ester antioxidants; secondary amine antioxidants such as phenyl-α-naphthylamine, phenyl-β-naphthylamine, p-(p-toluenesulfonylamide)-diphenylamine, 4,4'-bis(α,α-dimethylbenzyl)diphenylamine, N,N-diphenyl-p-phenylenediamine, N-isopropyl-N'-phenyl-p-phenylenediamine, and butyl aldehyde-aniline condensates; imidazole antioxidants; quinoline antioxidants; hydroquinone antioxidants; and the like.

These antioxidants can be used alone or in combination. The content of the antioxidant in the rubber composition according to the present invention is not particularly limited, the content is preferably 0.01 to 15 parts by weight, more preferably 0.05 to 10 parts by weight, still more preferably 0.1 to 5 parts by weight relative to 100 parts by weight of the rubber components including the copolymer rubber according to the present invention.

Besides the ingredients described above, the acrylic rubber composition according to the present invention can contain compounding agents usually used in the rubber processing field. Examples of such compounding agents include photostabilizers; plasticizers; softening agents; processing aids; tackifiers; lubricants; greases; flame retardants; antifungal agents; antistatic agents; colorants; and the like. These compounding agents can be compounded in any amount in the range not inhibiting the object and effect of the present invention, and can be compounded in amounts according to the purpose of the compounding.

The acrylic rubber composition according to the present invention can be prepared by compounding the cross-linking agent, the co-cross-linking agent, the sulfur-based compound, and a variety of compounding agents used as needed with the rubber component including the acrylic rubber (A), mixing and kneading these ingredients with an open roll mill, a Banbury mixer, a kneader, or the like, and then, further kneading these with a kneading roll.

Although the ingredients can be compounded in any order, preferred order is as follows. Ingredients which barely react or decompose by heat are sufficiently mixed, and then ingredients which readily react or decompose by heat, such as the cross-linking agent, are mixed in a short time at a temperature at which the reaction and the decomposition thereof are

avoided.

The lowest Mooney viscosity at 125°C (Vm, 125°C) of the acrylic rubber composition according to the present invention is preferably 10 to 80, more preferably 20 to 70, still more preferably 30 to 60.

<Cross-linked rubber>

The cross-linked rubber according to the present invention is obtained by cross-linking the above-mentioned acrylic rubber composition according to the present invention.

The cross-linked rubber according to the present invention can be produced as follows: The acrylic rubber composition according to the present invention is formed with a forming machine which can form the acrylic rubber composition into a desired shape, such as an extruder, an injection molding machine, a press, or a roll, and the formed product is cross-linked by heating into a cross-linked rubber having a fixed shape. In this case, cross-linking may be performed after the acrylic rubber composition is preliminarily formed, or cross-linking and forming may be performed at the same time. The forming temperature is usually 10 to 140°C, preferably 25 to 120°C.

The cross-linking temperature is usually 150 to 190°C, preferably 160 to 180°C, and the cross-linking time is usually 2 to 60 minutes, preferably 3 to 40 minutes. The heating method is appropriately selected from methods used in cross-linking of rubber, such as press heating, steam heating, oven heating, and hot air heating.

In the method of producing the cross-linked rubber according to the present invention, a cross-linked rubber having sufficient mechanical properties can be obtained only by performing primary cross-linking, but secondary cross-linking may be performed in addition to primary cross-linking. The secondary cross-linking is performed under a heated air environment at usually 130 to 220°C for 1 to 48 hours.

From the viewpoint of productivity, energy saving, and carbon neutrality, the cross-linked rubber according to the present invention is preferably a primarily cross-linked product of the acrylic rubber composition according to the present invention. For example, the cross-linked rubber according to the present invention is preferably a primarily cross-linked product obtained by heat-cross-linking the acrylic rubber composition according to the present invention at a temperature of 150°C to 190°C for 2 to 60 hours.

The cross-linked rubber according to the present invention can be used as sealing materials such as O-rings, packings, diaphragms, oil seals, shaft seals, bearing sheaths, mechanical seals, wellhead seals, seals for electrical and electronic devices, and seals for air compressors; a variety of gaskets such as cylinder head gaskets attached to a connection between a cylinder block and a cylinder head, rocker cover gaskets attached to a connection between a rocker cover and a cylinder head, oil pan gaskets attached to a connection between an oil pan and a cylinder head or a transmission case, gaskets for fuel cell separators attached between a pair of housings to sandwich a unit cell including a positive electrode, an electrolyte plate, and a negative electrode, and a gasket for top covers for hard disk drives; buffer materials; vibration insulators; coating materials for electric wires; industrial belts; tubing materials; hose materials; belt materials; boot materials; sheets; and the like. Especially, the cross-linked rubber according to the present invention can be suitably used as a hose material, a sealing material, and the like.

The cross-linked rubber according to the present invention can be suitably used as extrusion molded products and cross-linked products used in automobile applications, for example, fuel oil hoses for fuel tanks such as fuel hoses, filler neck hoses, vent hoses, vapor hoses, and oil hoses, air hoses such as turbo air hoses and transmission control hoses, and a variety of hose materials such as radiator hoses, heater hoses, brake hoses, and air conditioner hoses.

EXAMPLES

Hereinafter, the present invention will be described in detail by way of Examples, but the present invention will not be limited to these Examples. Note that the term "part(s)" is weight-based unless otherwise specified. A variety of physical properties were measured as follows.

<Polymer Mooney viscosity (ML1+4, 100°C)>

The Mooney viscosity (polymer Mooney viscosity) of the acrylic rubber (A) was measured at a temperature of 100°C according to JIS K6300.

<Scorch properties>

The Mooney scorch of the acrylic rubber composition was measured at a temperature of 125°C according to JIS K6300, and the lowest Mooney viscosity "Vm" and the Mooney scorch time "t5" were determined. A greater value of the Mooney scorch time "t5" indicates higher scorch stability.

<Cross-linking test>

The acrylic rubber composition was subjected to a cross-linking test at 170°C for 20 minutes using a rubber vulcanization tester (Moving Die Rheometer MDR, available from Alpha Technologies. Inc.). From the results of the cross-linking test, the minimum torque "ML", the maximum torque "MH", and T90 were determined. To be noted, "T90" means the time taken to increase the torque by 90% from the minimum torque ML, where the value of "maximum torque MH - minimum torque ML" was regarded as 100%. When the value of T90 is within 15 minutes, it can be determined that the acrylic rubber composition has a practically sufficient cross-linking speed.

<Normal-state physical properties of cross-linked rubber (primarily cross-linked product)>

According to JIS K6251, a test piece having a dumbbell shape #3 was cut from a sheet-shaped cross-linked acrylic rubber (primarily cross-linked product), and was measured for tensile strength, elongation, and stress at 100% elongation. According to JIS K6253-3, the hardness of the cross-linked rubber was measured with a durometer hardness tester (type A).

<Rate of increase in tensile strength by secondary cross-linking>

A sheet-shaped cross-linked acrylic rubber (primarily cross-linked product) was heated in an oven at 170°C for 4 hours, giving a secondarily cross-linked product. According to JIS K6251, a test piece was cut from the secondarily cross-linked product, and was measured for tensile strength. From the following expression, the rate of increase in tensile strength by secondary cross-linking was determined:

rate of increase (%) in tensile strength by secondary cross-linking = ("tensile strength of secondarily cross-linked product" - "tensile strength of primarily cross-linked product")/"tensile strength of primarily cross-linked product" × 100

When the rate of increase in tensile strength by secondary cross-linking is within 20%, it can be determined that the cross-linking reaction sufficiently progresses even if secondary cross-linking is not performed.

<Synthetic Example 1 (production of acrylic rubber (A-1))>

200 Parts of water, 3 parts of sodium lauryl sulfate, 98 parts of ethyl acrylate, and 2 parts of vinyl monochloroacetate were charged into a polymerization reactor equipped with a thermometer, a stirrer, a nitrogen inlet pipe, and a decompression device. Thereafter, oxygen was sufficiently removed by repeating reduced-pressure degassing and nitrogen purge. Then, 0.002 parts of sodium formaldehyde sulfoxylate and 0.005 parts of cumene hydroperoxide were added to initiate an emulsion polymerization reaction at normal pressure under normal temperature, and the reaction was continued until the polymerization conversion ratio reached 95%. The resulting polymer emulsion was coagulated with a magnesium sulfate aqueous solution, washed with water, and dried, giving an acrylic rubber (A-1). The resulting acrylic rubber (A-1) had a Mooney viscosity (ML1+4, 100°C) of 45, and the acrylic rubber (A-1) comprised 98% by weight of an ethyl acrylate unit and 2% by weight of a vinyl monochloroacetate unit.

<Synthetic Example 2 (production of acrylic rubber (A-2))>

An acrylic rubber (A-2) was obtained in the same manner as in Synthetic Example 1 except that the amount of ethyl acrylate compounded was changed from 98 parts to 48 parts, 2 parts of monobutyl fumarate was compounded instead of 2 parts of vinyl monochloroacetate, and 50 parts of n-butyl acrylate was further compounded. The resulting acrylic rubber (A-2) had a Mooney viscosity (ML1+4, 100°C) of 35, and the acrylic rubber (A-2) comprised 48% by weight of an ethyl acrylate unit, 50% by weight of a n-butyl acrylate unit, and 2% by weight of a monobutyl fumarate unit.

<Synthetic Example 3 (production of acrylic rubber (A-3))>

An acrylic rubber (A-3) was obtained in the same manner as in Synthetic Example 2 except that the amount of ethyl acrylate compounded was changed from 48 parts to 32 parts, the amount of n-butyl acrylate compounded was changed from 50 parts to 39 parts, 2 parts of allyl glycidyl ether was compounded instead of 2 parts of monobutyl fumarate, and 27 parts of 2-methoxyethyl acrylate was further compounded. The resulting acrylic rubber (A-3) had a Mooney viscosity (ML1+4, 100°C) of 40, and the acrylic rubber (A-3) comprised 32% by weight of an ethyl acrylate unit, 39% by weight of a n-butyl acrylate unit, 27% by weight of a 2-methoxyethyl acrylate unit, and 2% by weight of an allyl glycidyl ether

unit.

<Synthetic Example 4 (production of acrylic rubber (A-4))>

An acrylic rubber (A-4) was obtained in the same manner as in Synthetic Example 2 except that the amount of ethyl acrylate compounded was changed from 48 parts to 49 parts, the amount of n-butyl acrylate compounded was changed from 50 parts to 51 parts, and monobutyl fumarate was not compounded. The resulting acrylic rubber (A-4) had a Mooney viscosity (ML1+4, 100°C) of 38, and the acrylic rubber (A-4) comprised 49% by weight of an ethyl acrylate unit and 51% by weight of a n-butyl acrylate unit.

<Synthetic Example 5 (production of acrylic rubber (A-5))>

An acrylic rubber (A-5) was obtained in the same manner as in Synthetic Example 4 except that the amount of ethyl acrylate compounded was changed from 49 parts to 45 parts, the amount of n-butyl acrylate compounded was changed from 51 parts to 37 parts, and 18 parts of 2-methoxyethyl acrylate was further compounded. The resulting acrylic rubber (A-5) had a Mooney viscosity (ML1+4, 100°C) of 32, and the acrylic rubber (A-5) comprised 45% by weight of an ethyl acrylate unit, 37% by weight of a n-butyl acrylate unit, and 18% by weight of a 2-methoxyethyl acrylate unit.

<Example 1>

(Production of acrylic rubber composition)

100 Parts of the acrylic rubber (A-1), 60 parts of carbon black (trade name "SEAST SO", available from Tokai Carbon Co., Ltd.), 2 parts of stearic acid (dispersing and softening agent for carbon black), 1 part of ester wax (trade name "Gregg G-8205", available from DIC Corporation), and 2 parts of 4,4'-bis($\alpha$,$\alpha$-dimethylbenzyl)diphenylamine (trade name "NOCRAC CD", available from Ouchi Shinko Chemical Industrial Co., Ltd., antioxidant) were kneaded with a Banbury mixer, and then, 5.00 parts (2.00 parts in terms of pure organic peroxide) of 1,3-bis(t-butylperoxyisopropyl)benzene (trade name "Vulcup 40KE", available from Hercules, Inc., organic peroxide, 40% product), 2.00 parts of N,N'-m-phenylene-dimaleimide (trade name "VULNOC PM", available from Ouchi Shinko Chemical Industrial Co., Ltd., co-cross-linking agent), and 0.50 parts of sulfur (trade name "SULFAX PMC", available from Tsurumi Chemical Industry Co., Ltd.) were added and kneaded with an open roll mill at 50°C, giving an acrylic rubber composition. The resulting acrylic rubber composition was evaluated for scorch properties, and was subjected to the cross-linking test by the methods described above. The results are shown in Table 1.

(Production of cross-linked rubber)

The acrylic rubber composition was shaped with a press at 10 MPa and 170°C for 20, and was cross-linked, giving a sheet-shaped cross-linked rubber (primarily cross-linked product) measuring 15 cm × 15 cm × 2 mm. Using the resulting sheet-shaped cross-linked rubber (primarily cross-linked product), normal-state physical properties (tensile strength, elongation, stress at 100% elongation, hardness) were measured, and the rate of increase in tensile strength by secondary cross-linking was measured. The results are shown in Table 1.

<Examples 2 to 4>

Acrylic rubber compositions were obtained in the same manner as in Example 1 except that the acrylic rubber (A-2), the acrylic rubber (A-3), or the acrylic rubber (A-4) was used instead of the acrylic rubber (A-1), and were evaluated likewise. Then, cross-linked rubbers were obtained in the same manner as in Example 1 except that the resulting acrylic rubber compositions were used, and were evaluated likewise. The results are shown in Table 1.

<Comparative Example 1>

An acrylic rubber composition was obtained in the same manner as in Example 1 except that sulfur was not compounded, and was evaluated likewise. Then, a cross-linked rubber was obtained in the same manner as in Example 1 except that the resulting acrylic rubber composition was used, and was evaluated likewise. The results are shown in Table 1.

<Comparative Examples 2 to 4>

Acrylic rubber compositions were obtained in the same manner as in Comparative Example 1 except that the acrylic rubber (A-2), the acrylic rubber (A-3), or the acrylic rubber (A-4) was used instead of the acrylic rubber (A-1), and were evaluated likewise. Then, cross-linked rubbers were obtained in the same manner as in Example 1 except that the resulting acrylic rubber compositions were used, and were evaluated likewise. The results are shown in Table 1.

<Examples 5 to 7>

Acrylic rubber compositions were obtained in the same manner as in Example 1 except that the acrylic rubber (A-5) was used instead of 100 parts of the acrylic rubber (A-1) and the amount of sulfur compounded was varied as shown in Table 2, and were evaluated likewise. Cross-linked rubbers were obtained in the same manner as in Example 1 except that the resulting acrylic rubber compositions were used, and were evaluated likewise. The results are shown in Table 2.

<Example 8>

An acrylic rubber composition was obtained in the same manner as in Example 5 except that 2.00 parts of triallyl isocyanurate (trade name "TAIC", available from Nippon Kasei Chemical Company Limited, co-cross-linking agent) was used instead of 2.00 parts of N,N'-m-phenylenedimaleimide and 1.00 part of phenothiazine (trade name "TDP", available from Kawaguchi Chemical Industry Co., LTD., sulfur-based compound) was used instead of 0.20 parts of sulfur, and was evaluated likewise. Then, a cross-linked rubber was obtained in the same manner as in Example 5 except that the resulting acrylic rubber composition was used, and was evaluated likewise. The results are shown in Table 2.

<Example 9>

An acrylic rubber composition was obtained in the same manner as in Example 8 except that 1.00 part of zinc dibutyldithiocarbamate (trade name "NOCCELER BZ", available from Ouchi Shinko Chemical Industrial Co., Ltd., sulfur-based compound) was used instead of 1.00 part of phenothiazine, and was evaluated likewise. Then, a cross-linked rubber was obtained in the same manner as in Example 8 except that the resulting acrylic rubber composition was used, and was evaluated likewise. The results are shown in Table 2.

<Example 10>

An acrylic rubber composition was obtained in the same manner as in Example 5 except that 2.00 parts of trimethylolpropane trimethacrylate (trade name "TMPT", available from Shin Nakamura Chemical Co., Ltd., co-cross-linking agent) was used instead of 2.00 parts of N,N'-m-phenylenedimaleimide and 1.00 part of tetramethylthiuram disulfide (trade name "TMTD", available from Sanshin Chemical Industry Co., Ltd., sulfur-based compound) was used instead of 0.20 parts of sulfur. Then, a cross-linked rubber was used in the same manner as in Example 5 except that the resulting acrylic rubber composition was used, and was evaluated likewise. The results are shown in Table 2.

<Examples 11 and 12>

Acrylic rubber compositions were obtained in the same manner as in Example 6 except that the amount of N,N'-m-phenylenedimaleimide compounded was varied as shown in Table 2, and were evaluated likewise. Then, cross-linked rubbers were obtained in the same manner as in Example 6 except that the resulting acrylic rubber compositions were used, and were evaluated likewise. The results are shown in Table 2.

<Examples 13 and 14>

Acrylic rubber compositions were obtained in the same manner as in Example 6 except that the amount of 1,3-bis(t-butylperoxyisopropyl)benzene compounded was varied as shown in Table 2, and were evaluated likewise. Then, cross-linked rubbers were obtained in the same manner as in Example 6 except that the resulting acrylic rubber compositions were used, and were evaluated likewise. The results are shown in Table 2.

<Comparative Example 5>

An acrylic rubber composition was obtained in the same manner as in Example 6 except that N,N'-m-phenylenedimaleimide was not compounded, and was evaluated likewise. Then, a cross-linked rubber was obtained

in the same manner as in Example 6 except that the resulting acrylic rubber composition was used, and was evaluated likewise. The results are shown in Table 3.

<Comparative Example 6>

An acrylic rubber composition was obtained in the same manner as in Example 6 except that the amount of N,N'-m-phenylenedimaleimide compounded was changed from 2.00 parts to 15.00 parts, and was evaluated likewise. Then, a cross-linked rubber was obtained in the same manner as in Example 6 except that the resulting acrylic rubber composition was used, and was evaluated likewise. The results are shown in Table 3.

<Comparative Examples 7 and 8>

Acrylic rubber compositions were obtained in the same manner as in Example 6 except that the amount of 1,3-bis(t-butylperoxyisopropyl)benzene compounded was changed as shown in Table 3, and were evaluated likewise. Then, cross-linked rubbers were obtained in the same manner as in Example 6 except that the resulting acrylic rubber compositions were used, and were evaluated likewise. The results are shown in Table 3.

<Comparative Example 9>

An acrylic rubber composition was obtained in the same manner as in Example 6 except that the amount of sulfur compounded was changed from 0.50 parts to 5.00 parts, and was evaluated likewise. Then, a cross-linked rubber was obtained in the same manner as in Example 6 except that the resulting acrylic rubber composition was used, and was evaluated likewise. The results are shown in Table 3.

[Table 1]

Table 1

| | | Ex. 1 | Ex. 2 | Ex. 3 | Ex. 4 | Comp. Ex. 1 | Comp. Ex. 2 | Comp. Ex. 3 | Comp. Ex. 4 |
|---|---|---|---|---|---|---|---|---|---|
| Composition of acrylic rubber | | (A-1) | (A-2) | (A-3) | (A-4) | (A-1) | (A-2) | (A-3) | (A-4) |
| Ethyl acrylate unit | (wt%) | 98 | 48 | 32 | 49 | 98 | 48 | 32 | 49 |
| n-Butyl acrylate unit | (wt%) | | 50 | 39 | 51 | | 50 | 39 | 51 |
| 2-Methoxyethyl acrylate unit | (wt%) | | | 27 | | | | 27 | |
| Allyl glycidyl ether unit | (wt%) | | | 2 | | | | 2 | |
| Vinyl monochloroacetate unit | (wt%) | 2 | | | | 2 | | | |
| Monobutyl fum arate unit | (wt%) | | 2 | | | | 2 | | |
| Mooney viscosity of acrylic rubber | | 45 | 35 | 40 | 38 | 45 | 35 | 40 | 38 |
| Composition of acrylic rubber composition | | | | | | | | | |
| Acrylic rubber | (parts) | 100 | 100 | 100 | 100 | 100 | 100 | 100 | 100 |
| 1,3-Bis(t-butylperoxyiso-propyl)benzene | (parts) | 2.00 | 2.00 | 2.00 | 2.00 | 2.00 | 2.00 | 2.00 | 2.00 |
| N,N'-m-Phenylenedima-leimide | (parts) | 2.00 | 2.00 | 2.00 | 2.00 | 2.00 | 2.00 | 2.00 | 2.00 |
| Sulfur | (parts) | 0.50 | 0.50 | 0.50 | 0.50 | | | | |

(continued)

| Cross-linking properties of acrylic rubber composition | | | | | | | | | |
|---|---|---|---|---|---|---|---|---|---|
| Lowest Mooney viscosity Vm | | 42 | 36 | 32 | 44 | 41 | 36 | 33 | 45 |
| Mooney scorch time t5 (125°C) | (min) | >30 | 17.9 | 14.2 | 14.2 | 8.7 | 7.4 | 7.0 | 7.8 |
| Minimum torque ML | (dN·m) | 1.9 | 1.7 | 1.4 | 1.9 | 1.9 | 1.7 | 1.4 | 1.5 |
| Maximum torque MH | (dN·m) | 7.4 | 10.9 | 14.1 | 11.9 | 3.8 | 5.5 | 7.5 | 7.3 |
| T90 | (min) | 9.3 | 9.2 | 10.7 | 10.0 | 0.9 | 4.2 | 2.8 | 2.6 |
| Physical properties of cross-linked acrylic rubber (primarily cross-linked rubber) | | | | | | | | | |
| Tensile strength | (MPa) | 11.7 | 12.70 | 15.20 | 11.50 | 4.90 | 6.7 | 8.0 | 7.2 |
| Elongation | (%) | 380 | 220 | 160 | 150 | 370 | 150 | 130 | 120 |
| Stress at 100% elongation | (MPa) | 3.1 | 5.3 | 9.6 | 7.9 | 2.1 | 4.1 | 6.7 | 5.9 |
| Hardness | (Duro A) | 78 | 72 | 74 | 71 | 73 | 65 | 72 | 70 |
| Rate of increase in tensile strength by second cross-linking | (%) | -3 | +4 | +1 | +3 | -15 | -9 | +11 | +5 |

[Table 2]

Table 2

| | | Ex. 5 | Ex. 6 | Ex. 7 | Ex. 8 | Ex. 9 | Ex. 10 | Ex. 11 | Ex. 12 | Ex. 13 | Ex. 14 |
|---|---|---|---|---|---|---|---|---|---|---|---|
| Composition of acrylic rubber | | (A-5) | (A-5) | (A-5) | (A-5) | (A-5) | (A-5) | (A-5) | (A-5) | (A-5) | (A-5) |
| Ethyl acrylate unit | (wt%) | 45 | 45 | 45 | 45 | 45 | 45 | 45 | 45 | 45 | 45 |
| n-Butyl acrylate unit | (wt%) | 37 | 37 | 37 | 37 | 37 | 37 | 37 | 37 | 37 | 37 |
| 2-Methoxyethyl acrylate unit | (wt%) | 18 | 18 | 18 | 18 | 18 | 18 | 18 | 18 | 18 | 18 |
| Allyl glycidyl ether unit | (wt%) | | | | | | | | | | |
| Vinyl monochloroacetate unit | (wt%) | | | | | | | | | | |
| Monobutyl fumarate unit | (wt%) | | | | | | | | | | |
| Mooney viscosity of acrylic rubber | | 32 | 32 | 32 | 32 | 32 | 32 | 32 | 32 | 32 | 32 |
| Composition of acrylic rubber composition | | | | | | | | | | | |
| Acrylic rubber | (parts) | 100 | 100 | 100 | 100 | 100 | 100 | 100 | 100 | 100 | 100 |
| 1,3-Bis(t-butylperoxyisopropyl)benzene | (parts) | 2.00 | 2.00 | 2.00 | 2.00 | 2.00 | 2.00 | 2.00 | 2.00 | 1.20 | 2.80 |
| N,N'-m-Phenylenedimaleimide | (parts) | 2.00 | 2.00 | 2.00 | | | | 1.00 | 3.00 | 2.00 | 2.00 |
| Trimethylolpropane trimethacrylate | (parts) | | | | | | 2.00 | | | | |
| Triallyl isocyanurate | (parts) | | | | 2.00 | 2.00 | | | | | |
| Sulfur | (parts) | 0.20 | 0.50 | 1.50 | | | | 0.50 | 0.50 | 0.50 | 0.50 |
| Phenothiazine | (parts) | | | | 100 | | | | | | |
| Zinc dibutyldithiocarbamate | (parts) | | | | | 1.00 | | | | | |
| Tetramethylthiuram disulfide | (parts) | | | | | | 1.00 | | | | |
| Cross-linking properties of acrylic rubber composition | | | | | | | | | | | |
| Lowest Mooney viscosity Vm | | 31 | 32 | 33 | 35 | 30 | 30 | 40 | 38 | 39 | 39 |
| Mooney scorch time t5 (125°C) | (min) | 12.8 | 16.0 | 11.3 | >30 | 16.3 | 19.0 | 16.0 | 17.8 | 30.0 | 17.9 |
| Minimum torque ML | (dN·m) | 1.9 | 1.8 | 1.6 | 1.8 | 1.6 | 1.5 | 1.8 | 1.7 | 1.8 | 1.9 |
| Maximum torque MH | (dN·m) | 10.5 | 11.5 | 9.5 | 7.3 | 9.2 | 10.3 | 9.6 | 10.5 | 8.0 | 7.9 |
| T90 | (min) | 4.8 | 9.6 | 9.7 | 14.0 | 9.5 | 6.5 | 6.9 | 10.3 | 14.4 | 9.6 |

(continued)

| Physical properties of cross-linked acrylic rubber (primarily cross-linked rubber) | | | | | | | | | | | |
|---|---|---|---|---|---|---|---|---|---|---|---|
| Tensile strength | (MPa) | 12.0 | 12.4 | 12.5 | 9.3 | 9.3 | 9.2 | 11.4 | 12.0 | 9.2 | 11.4 |
| Elongation | (%) | 180 | 190 | 230 | 380 | 140 | 150 | 200 | 220 | 380 | 170 |
| Stress at 100% elongation | (MPa) | 6.9 | 6.1 | 4.5 | 2.9 | 6.1 | 4.0 | 5.5 | 5.1 | 2.1 | 6.3 |
| Hardness | (Duro A) | 70 | 69 | 70 | 65 | 73 | 69 | 67 | 68 | 64 | 68 |
| Rate of increase in tensile strength by second cross-linking | (%) | -9 | +0 | +5 | +8 | +5 | +5 | -5 | -3 | +18 | -4 |

[Table 3]

Table 3

| | | Comp. Ex. 5 | Comp. Ex. 6 | Comp. Ex. 7 | Comp. Ex. 8 | Comp. Ex. 9 |
|---|---|---|---|---|---|---|
| Composition of acrylic rubber | | (A-5) | (A-5) | (A-5) | (A-5) | (A-5) |
| Ethyl acrylate unit | (wt%) | 45 | 45 | 45 | 45 | 45 |
| n-Butyl acrylate unit | (wt%) | 37 | 37 | 37 | 37 | 37 |
| 2-Methoxyethyl acrylate unit | (wt%) | 18 | 18 | 18 | 18 | 18 |
| Allyl glycidyl ether unit | (wt%) | | | | | |
| Vinyl monochloroacetate unit | (wt%) | | | | | |
| Monobutyl fumarate unit | (wt%) | | | | | |
| Mooney viscosity of acrylic rubber | | 32 | 32 | 32 | 32 | 32 |
| Composition of acrylic rubber composition | | | | | | |
| Acrylic rubber | (parts) | 100 | 100 | 100 | 100 | 100 |
| 1,3-Bis(t-butylperoxyisopropyl) benzene | (parts) | 2.00 | 2.00 | 0.08 | 5.20 | 2.00 |
| N,N'-m-Phenylenedimaleimide | (parts) | | 15.00 | 2.00 | 2.00 | 2.00 |
| Trimethylolpropane trimethacrylate | (parts) | | | | | |
| Triallyl isocyanurate | (parts) | | | | | |
| Sulfur | (parts) | 0.50 | 0.50 | 0.50 | 0.50 | 5.00 |
| Phenothiazine | (parts) | | | | | |
| Zinc dibutyldithiocarbamate | (parts) | | | | | |
| Tetramethylthiuram disulfide | (parts) | | | | | |
| Cross-linking properties of acrylic rubber composition | | | | | | |
| Lowest Mooney viscosity Vm | | 33 | 37 | 33 | 35 | 32 |
| Mooney scorch time t5 (125°C) | (min) | 5.2 | 5.2 | >30 | 7.3 | >30 |
| Minimum torque ML | (dN·m) | 1.9 | 1.9 | 1.6 | 1.8 | 1.6 |
| Maximum torque MH | (dN·m) | 2.3 | 10.2 | 1.7 | 7.5 | 1.8 |
| T90 | (min) | 18.3 | 2.9 | - | 2.8 | - |
| Physical properties of cross-linked acrylic rubber (primarily cross-linked rubber) | | | | | | |
| Tensile strength | (MPa) | Not cross-linked Not cross-linked | 11.5 | Not cross-linked Not cross-linked | 11.3 | Not cross-linked Not cross-linked |
| Elongation | (%) | | 80 | | 90 | |
| Stress at 100% elongation | (MPa) | | - | | - | |
| Hardness | (Duro A) | | 72 | | 73 | |
| Rate of increase in tensile strength by second cross-linking | (%) | | +8 | | +3 | |

Tables 1 and 2 show that the acrylic rubber compositions each comprising the acrylic rubber (A), the organic peroxide (B), the co-cross- linking agent (C), and the sulfur-based compound (D) in specific proportions had a sufficient

cross-linking speed, had favorable scorch stability, and gave cross-linked rubbers having sufficient mechanical properties even if secondary cross-linking was not performed (Examples 1 to 14).

In contrast, in the cases where the acrylic rubber compositions did not comprise the sulfur-based compound (D), the acrylic rubber compositions had insufficient scorch stability, and underwent insufficient progression of cross-linking. Moreover, the cross-linked rubbers prepared from such acrylic rubber compositions had inferior mechanical properties (Comparative Examples 1 to 4).

In the case where the acrylic rubber composition did not comprise the co-cross-linking agent (C), in the case where the content of the organic peroxide (B) was too small, and in the case where the content of the sulfur-based compound (D) was too large, cross-linking of the resulting acrylic rubber compositions did not sufficiently progress, and no cross-linked rubber could be obtained (Comparative Examples 5, 7, and 9).

In the case where the content of the organic peroxide (B) or the co-cross-linking agent (C) contained in the acrylic rubber composition was too large, the acrylic rubber composition had low scorch stability, and further, the cross-linked rubber prepared from such an acrylic rubber composition had inferior mechanical properties (elongation in particular) (Comparative Examples 6 and 8).

## Claims

1. An acrylic rubber composition comprising an acrylic rubber (A), an organic peroxide (B), a co-cross-linking agent (C), and a sulfur-based compound (D),

   wherein a content of the organic peroxide (B) is 0.1 to 5 parts by weight relative to 100 parts by weight of the acrylic rubber (A),
   a content of the co-cross-linking agent (C) is 0.1 to 10 parts by weight relative to 100 parts by weight of the acrylic rubber (A), and
   a content of the sulfur-based compound (D) is 0.05 to 3 parts by weight relative to 100 parts by weight of the acrylic rubber (A).

2. The acrylic rubber composition according to claim 1, wherein the acrylic rubber (A) contains at least one of an alkyl (meth)acrylate ester monomer unit and an alkoxyalkyl (meth)acrylate ester monomer unit in a proportion of 40 to 100% by weight.

3. A cross-linked rubber prepared by cross-linking the acrylic rubber composition according to claim 1 or 2.

4. The cross-linked rubber according to claim 3, wherein the cross-linked rubber is a hose material or a sealing material.

## INTERNATIONAL SEARCH REPORT

International application No.
**PCT/JP2024/035664**

**A. CLASSIFICATION OF SUBJECT MATTER**

***C08L 33/08***(2006.01)i; ***C08K 5/14***(2006.01)i; ***C08K 5/36***(2006.01)i; ***C09K 3/10***(2006.01)i; ***F16L 11/06***(2006.01)i
FI: C08L33/08; C08K5/14; C08K5/36; F16L11/06; C09K3/10 E

According to International Patent Classification (IPC) or to both national classification and IPC

**B. FIELDS SEARCHED**

Minimum documentation searched (classification system followed by classification symbols)

C08L33/08; C08K5/14; C08K5/36; C09K3/10; F16L11/06

Documentation searched other than minimum documentation to the extent that such documents are included in the fields searched

Published examined utility model applications of Japan 1922-1996
Published unexamined utility model applications of Japan 1971-2024
Registered utility model specifications of Japan 1996-2024
Published registered utility model applications of Japan 1994-2024

Electronic data base consulted during the international search (name of data base and, where practicable, search terms used)

CAplus/REGISTRY (STN)

**C. DOCUMENTS CONSIDERED TO BE RELEVANT**

| Category* | Citation of document, with indication, where appropriate, of the relevant passages | Relevant to claim No. |
|---|---|---|
| X | JP 2010-174217 A (DENKI KAGAKU KOGYO KABUSHIKI KAISHA) 12 August 2010 (2010-08-12)<br>claims 1, 5, 7, 8, paragraph [0007], examples 1-9, comparative examples 5-7, tables 1, 2 | 1-4 |
| X | JP 2005-199564 A (TOKAI RUBBER INDUSTRIES, LTD.) 28 July 2005 (2005-07-28)<br>claims 1, 4, 5, inner layer Ingredients a-d, table 1, examples 1-8, tables 3, 4 | 1-4 |
| X | JP 3-241 A (DENKI KAGAKU KOGYO KABUSHIKI KAISHA) 07 January 1991 (1991-01-07)<br>claims, page 2, upper right column, line 2 to lower left column, line 7, page 4, lower left column, lines 13-20, table 2 | 1-4 |
| X | JP 59-215347 A (DENKI KAGAKU KOGYO KABUSHIKI KAISHA) 05 December 1984 (1984-12-05)<br>claim 2, examples 1-11, 13, 14, comparative examples 1, 7-10, tables 1-5 | 1-4 |
| A | CN 1521195 A (YAN, Tang) 18 August 2004 (2004-08-18)<br>claim 1, example 3 | 1-4 |

☑ Further documents are listed in the continuation of Box C. ☑ See patent family annex.

* Special categories of cited documents:
"A" document defining the general state of the art which is not considered to be of particular relevance
"D" document cited by the applicant in the international application
"E" earlier application or patent but published on or after the international filing date
"L" document which may throw doubts on priority claim(s) or which is cited to establish the publication date of another citation or other special reason (as specified)
"O" document referring to an oral disclosure, use, exhibition or other means
"P" document published prior to the international filing date but later than the priority date claimed
"T" later document published after the international filing date or priority date and not in conflict with the application but cited to understand the principle or theory underlying the invention
"X" document of particular relevance; the claimed invention cannot be considered novel or cannot be considered to involve an inventive step when the document is taken alone
"Y" document of particular relevance; the claimed invention cannot be considered to involve an inventive step when the document is combined with one or more other such documents, such combination being obvious to a person skilled in the art
"&" document member of the same patent family

| Date of the actual completion of the international search | Date of mailing of the international search report |
|---|---|
| **24 October 2024** | **19 November 2024** |

| Name and mailing address of the ISA/JP | Authorized officer |
|---|---|
| **Japan Patent Office (ISA/JP)**<br>**3-4-3 Kasumigaseki, Chiyoda-ku, Tokyo 100-8915**<br>**Japan** | Telephone No. |

Form PCT/ISA/210 (second sheet) (July 2022)

**INTERNATIONAL SEARCH REPORT**

International application No.
**PCT/JP2024/035664**

**C. DOCUMENTS CONSIDERED TO BE RELEVANT**

| Category* | Citation of document, with indication, where appropriate, of the relevant passages | Relevant to claim No. |
|---|---|---|
| A | JP 2021-191833 A (ZEON CORPORATION) 16 December 2021 (2021-12-16) claim 1, paragraphs [0271]-[0272], tables 4-1, tables 5-1 | 1-4 |

Form PCT/ISA/210 (second sheet) (July 2022)

**INTERNATIONAL SEARCH REPORT**
**Information on patent family members**

International application No.
**PCT/JP2024/035664**

| Patent document cited in search report | Publication date (day/month/year) | Patent family member(s) | Publication date (day/month/year) |
|---|---|---|---|
| JP 2010-174217 A | 12 August 2010 | (Family: none) | |
| JP 2005-199564 A | 28 July 2005 | (Family: none) | |
| JP 3-241 A | 07 January 1991 | (Family: none) | |
| JP 59-215347 A | 05 December 1984 | (Family: none) | |
| CN 1521195 A | 18 August 2004 | (Family: none) | |
| JP 2021-191833 A | 16 December 2021 | (Family: none) | |

Form PCT/ISA/210 (patent family annex) (July 2022)

## REFERENCES CITED IN THE DESCRIPTION

*This list of references cited by the applicant is for the reader's convenience only. It does not form part of the European patent document. Even though great care has been taken in compiling the references, errors or omissions cannot be excluded and the EPO disclaims all liability in this regard.*

### Patent documents cited in the description

- JP H05214196 A